# EUROPÄISCHE PATENTANMELDUNG

(11) **EP 1 134 433 A2**
(43) Veröffentlichungstag der Anmeldung: **19.09.2001**
(21) Anmeldenummer: 01250090.6
(22) Anmeldetag: 14.03.2001
(51) Int. Cl.: F16B 13/02

(54) **Dübellochverschlussbolzen für Gebäudeaussenwandbohrungen**

(30) Priorität: 15.03.2000 DE 10012488
(71) Anmelder: Hinkelmann, Klaus-Dieter, 10178 Berlin (DE); Petereit, Jürgen, 10965 Berlin (DE); Dingel, Bernd, 15831 Gross Ziethen (DE)
(72) Erfinder: Hinkelmann, Klaus-Dieter, 10178 Berlin (DE)
(74) Vertreter: Jungblut, Bernhard Jakob

(57) **Zusammenfassung**

Die Erfindung betrifft einen Dübellochverschlußbolzen (1) mit einem in eine in einer tragenden Gebäudeaußenwand (2) angebrachten Bohrung (3) einsteckbaren Befestigungselement (4) sowie mit einem mit dem Befestigungselement (4) verbundenen Abdeckflansch (5). Sie ist dadurch gekennzeichnet, daß zwischen dem Abdeckflansch (5) und dem Befestigungselement (4) ein Schaftbereich (6) angeordnet ist, welcher eine an der tragenden Gebäudeaußenwand (2) außenseitig angebrachte Isolierschicht (7) durchgreift, daß im Schaftbereich (6) zumindest eine die Bohrung (3) in der Isolierschicht (7) ausfüllende elastische Dichtungslippe (8) eingerichtet ist, und daß der Abdeckflansch (5) ein Dichtungselement (9) zum Abschluß der isolierschicht-außenseitigen Bohrungsöffnung (10) aufweist.

## Beschreibung

Die Erfindung betrifft einen Dübellochverschlußbolzen mit einem in eine in einer tragenden Gebäudeaußenwand angebrachten Bohrung einsteckbaren Befestigungselement sowie mit einem mit dem Befestigungselement verbundenen Abdeckflansch. In eine Gebäudeaußenwand müssen insbesondere zur Befestigung von Baugerüsten und dergleichen Bohrungen eingebracht werden, in welche Dübel für Befestigungselemente von Gerüsten eingebracht werden. Aus optischen Gründen und zum Schutz vor Eintritt von Feuchtigkeit muß nach dem Entfernen des Gerüstes das Dübelloch verschlossen werden. In der Regel verbleibt der Dübel dabei in der Bohrung. Zum Verschluß verwendet man Dübellochverschlußbolzen, welche mit dem Befestigungselement in die Bohrung bzw. in den Dübel eingesteckt werden und deren Abdeckflansch an der Gebäudeaußenwand dichtend anliegt.

Ein Dübellochverschlußbolzen des eingangs genannten Aufbaus ist bspw. aus der Literaturstelle DE-U-6804132 bekannt. Bei dem insofern bekannten Dübellochverschlußbolzen ist der Abdeckflansch unmittelbar an dem Befestigungselement angeordnet. Für Innenraumanwendungen sind Dübellochverschlußbolzen in diversen Ausführungen bekannt, wozu lediglich beispielhaft auf die Literaturstellen DE-U-7616020, DE-U-7246863 verwiesen wird. Auch bei den insofern bekannten Dübellochverschlußbolzen schließt der Abdeckflansch unmittelbar an das Befestigungselement an.

Der Erfindung liegt die folgende Problematik zugrunde. Im Laufe der letzten Jahre wurden viele Gebäude in Deutschland und Nordeuropa mit Außenwanddämmsystemen umgeben. Diese Isolierung muß bei jeder Renovierung oder Instandsetzung bei der Gerüstsicherung durch neue Dübelbohrungen verletzt werden. Anschließend ist die Isolierung durch geeignete Maßnahmen wieder zu verschließen, um Witterungseinflüsse von Mauerwerk und Isolierung fern zu halten. Insbesondere eindringende Feuchtigkeit und Nässe sind unbedingt zu vermeiden, da dieses zu einer Beeinträchtigung der Isolationswirkung und zu bleibenden Beschädigungen der Isolation und des Mauerwerks führen würde. Dies gilt insbesondere für eindringendes Wasser in Verbindung mit Frost. Dübellochverschlußbolzen des eingangs genannten Aufbaus sind in Verbindung mit Außenwanddämmsystemen jedoch ungeeignet, da diese lediglich in die Isolierschicht eingesteckt würden und hierin keinen ausreichenden Halt finden. Die Folge wäre ein Herausfallen des Dübellochverschlußbolzens mit allen vorstehend geschilderten nachteiligen Folgen des Eindringens von Feuchtigkeit und Nässe.

Zur Lösung dieser Problematik ist es aus der Praxis bekannt, Kunststoffbolzen in die Bohrung der Isolierschicht einzubringen und mit einer dichtenden, langsam elastisch aushärtenden Masse zu umgeben. Aus der Praxis ist es weiterhin bekannt, auf konventionelle Weise die Bohrung in der Isolierschicht zu verstopfen bzw. zuzuspachteln. Diese aus der Praxis bekannten Vorgehensweisen sind jedoch in der Ausführung umständlich und zeitraubend. Zudem bestehen mehrere Fehlerquellen durch verwendete Materialien und Ausführung der Arbeitsschritte, die zu einem ungenügenden Verschluß der Isolierschicht führen können. Zu nennen sind hier ungenügender Halt der Bolzen in der Bohrung, nicht geschlossene Nähte der dichtenden Masse und Störungen im Aushärtungsprozeß der dichtenden Masse. Die Folgen sind wiederum Störender Eintritt von Nässe und Feuchtigkeit.

Der Erfindung liegt demgegenüber das technische Problem zugrunde, einen Dübellochverschlußbolzen anzugeben, welcher in Gebäudeaußenwände von Gebäuden mit Außenwanddämmsystemen auf einfache Weise eingebracht werden kann und zuverlässig gegen eindringende Feuchtigkeit und Nässe abdichtet.

Zur Lösung dieses technischen Problems lehrt die Erfindung, daß zwischen dem Abdeckflansch und dem Befestigungselement ein Schaftbereich angeordnet ist, welcher eine an der tragenden Gebäudeaußenwand außenseitig angebrachte Isolierschicht durchgreift, daß im Schaftbereich zumindest eine die Bohrung in der Isolierschicht ausfüllende elastische Dichtungslippe eingerichtet ist, und daß der Abdeckflansch ein Dichtungselement zum Abschluß der Isolierschicht außenseitigen Bohrungsöffnung aufweist. Es versteht sich, daß der Abdeckflansch die Bohrungsöffnung ausreichend abdeckt. Hierzu ist der Durchmesser des Abdeckflansches größer bemessen als jener der Bohrungsöffnung. Der die Isolierschicht durchspannende Schaftbereich weist eine Länge auf, welche im wesentlichen der Dicke der Isolierschicht entspricht und kann nach Maßgabe der vorgefundenen Isolierschicht bemessen werden.

Die Erfindung hat gegenüber der aus der Praxis bekannten Vorgehensweise bei Außenwanddämmsystemen die folgenden Vorteile. Die Montage ist einfach in einem einzigen Arbeitsgang durchzuführen, und zwar ohne Hilfsstoffe und spezielle Werkzeuge. Der erfindungsgemäße Dübellochverschlußbolzen wird einfach eingedrückt. Es wird ein kraftvoller und sicherer Halt des Dübellochverschlußbolzens durch Verankerung des Befestigungselements in der tragenden Gebäudeaußenwand erreicht. Die Bohrung sowie die Bohrungsöffnung sind wasserdicht verschlossen durch rein mechanische Mittel. Hierdurch sind Fehlerquellen verringert oder gar ausgeschlossen und auch die Kosten sind aufgrund verringerter Montagezeiten und wegfallender Hilfsstoffe reduziert. Schließlich wird durch Verzicht auf Hilfsstoffe, wie Dichtungsmassen, ein Beitrag zur Abfallvermeidung auf der Baustelle geleistet. Mit den im Schaftbereich angeordneten Dichtungslippen, welchem im Bereich der Isolierung, die überwiegend aus weichem Material wie Polystyrol, Mineralwolle o.ä. besteht, werden zudem verschiedene funktionale Vorteile erzielt. Die Bohrung stellt eine Kältebrücke dar, die mit der Dichtungslippe unterbrochen wird. Es versteht sich, daß die Dichtungslippen elastisch und deutlich größer als die Bohrung in der Isolierschicht ist und sich unter Druck dem im Bereich der Isolierschicht meist unregelmäßig geformten Bohrloch anpaßt. Bei Einrichtung mehrerer Dichtungslippen wird zudem ein Mehrkammersystem mit Luftfüllung geschaffen, welches eigenständige Dämmwirkung aufweist. Zusätzlich zu dem Dichtungselement des Abdeckflansches wird weiterhin eine mehrfache Sicherheit gegen eindringende Feuchtigkeit und Nässe geschaffen. Das Dichtungselement des Abdeckflansches wird auch besonders zuverlässig im Bereich der Bohrungsöffnung gehalten aufgrund der mit dem Einbau in die Bohrung der tragenden Gebäudeaußenwand erzeugbaren Zugkraft und statischen Stabilität.
Bevorzugterweise erstreckt sich die Dichtungslippe orthogonal zur Längserstreckung des Schaftbereiches und weist einen kreisförmigen Außenumfang auf. Eine besonders gute abdichtende Wirkung und Ausnutzung elastischer Eigenschaften wird erreicht, wenn die Dichtungslippe eine in radialer Richtung abnehmende Materialstärke besitzt.

Bevorzugt ist es, daß im Schaftbereich eine Mehrzahl von Dichtungslippen, vorzugsweise 2-10, höchst vorzugsweise 2-5, insbesondere 3, aufweist. Es wird dann eine entsprechende Anzahl von gegeneinander abgeschlossenen Kammern im Bereich der Isolierschicht geschaffen. In diesen Zusammenhängen ist es vorteilhaft, wenn der Außenumfang der Dichtungslippen in Richtung des Befestigungselements zum Abdeckflansch sukzessive zunimmt. Dadurch ist einerseits eine relativ geringe Eindrückkraft und andererseits eine besonders gute Abdichtung insbesondere im äußeren Bereich der Bohrung in der Isolierschicht eingerichtet.

Hinsichtlich des Dichtungselementes sind je nach Anwendungsbereich verschiedene Ausführungsformen möglich bzw. bevorzugt. Die besonderen Merkmale dieser verschiedenen Ausführungsformen können auch beliebig miteinander kombiniert vorliegen. In einer einfachen Ausführungsform, welche für einigermaßen glatte Außenwände ausreichend ist, ist das Dichtungselement als abdeckflanschumfangseitig umlaufende Andrucklippe ausgebildet. Die Andrucklippe ist aus einem elastischen Werkstoff ausgebildet und in Richtung der Gebäudeaußenwand vorgespannt. Im Zuge des Eindrückens des Dübellochverschlußbolzens kommt die Andrucklippe elastisch zum Anbiegen an die Gebäudeaußenwandfläche. Im Falle von rauhen Oberflächen mit groben Körnungen bspw. Rauhputz, kann es vorgesehen sein, daß das Dichtungselement als in die isolierschichtaußenseitige Bohrungsöffnung eingreifender Dichtkonus ausgebildet ist. Das Dichtungselement kann auch als isolierschichtseitig am Abdeckflansch eingerichteter Dichtring vorgesehen sein, welcher vorzugsweise aus einem elastischen, geschlossenporig geschäumten Material geformt ist. Der Dichtring kommt dann zwischen dem Abdeckflansch und der die Bohrungsöffnung umgebenden Bereiche zu Anliegen und wird beim Eindrücken des Dübellochverschlußbolzens elastisch komprimiert. Die Merkmale des Dichtkonus und des Dichtrings können auch gleichzeitig vorgesehen sein.

Das Befestigungselement kann grundsätzlich in verschiedenster Weise ausgebildet sein, so lange eine stabile Halterung in der in der tragenden Gebäudeaußenwand angebrachten Bohrung bzw. in dem darin befindlichen Dübel gewährleistet ist. Bevorzugt ist es, wenn das Befestigungselement ein in die Bohrung der tragenden Gebäudeaußenwand einführbares Nagelteil sowie eine oder mehrere Haltelamellen, die in Kraftschlußverbindung mit der Innenwand der Bohrung bringbar sind, aufweist. Die Haltelamellen können sich orthogonal zur Längserstreckung des Nagelteils erstrecken und einen kreisförmigen Außenumfang aufweisen.

Besonders kostengünstig herstellbar ist ein erfindungsgemäßer Dübellochverschlußbolzen, wenn er einstückig aus einem Kunststoff, ausgewählt aus der Gruppe bestehend aus "PVC, LPDE, HPDE, PP, und Mischungen oder Copolymeren solcher Stoffe" gebildet ist.

Um eine optimale Abdichtung zu gewähren, kann der Abdeckflansch gegenüber dem Schaft verschwenkbar, bzw. abbiegbar sein. Dies kann beispielsweise durch die Verwendung eines Kugelgelenkes zwischen Schaft und Abdeckflansch, oder durch eine den Schaft orthogonal zur Längserstreckung des Schaftes umlaufende Einkerbung oder Einschnürung ermöglicht werden, welche unmittelbar bei dem Abdeckflansch angeordnet ist.

Der nach der Montage sichtbare Bereich des Abdeckflansches ist zweckmäßigerweise so beschaffen, daß er verputzt oder lackiert/gestrichen werden kann. Da sich manche Kunststoffe (z.B. PE) aufgrund ihrer glatten Oberflächenbeschaffenheit und /oder chemischen Eigenschaften nur schlecht verputzen oder lackieren/streichen lassen, ist es hilfreich, wenn zumindest die nach der Montage sichtbaren Bereiche des Abdeckflansches aktiviert, beispielsweise aufgerauht, werden. Im einfachsten Fall kann dies durch den Einsatz von Schleifmitteln erzielt werden. Das Aufrauhen der Kunststoffoberfläche kann auch durch das Bestrahlen des Kunststoffes mit Laser, dem Beizen des Kunststoffes in Chromsäure oder durch das CASING-Verfahren erzielt werden. Beim CASING-Verfahren (cross-linking by activated species of inert gas) kommt es ähnlich wie bei der Bestrahlung zur Kunststoffoberflächenvernetzung bei verschiedensten Kunststoffen, wie z.B. bei Polytetrafluorethylen und Polyethylen. Die so behandelten Kunststoffe lassen sich danach lackieren/streichen und verputzen. Beim Beizen von z.B. Polypropylen wird der Teil des amorphen Bereiches stärker angegriffen, als der kristalline Bereich, was zum Aufrauhen der Kunststoffoberfläche führt. Auch chemische Modifikationen sind möglich.
Die Erfindung wird im folgenden anhand von lediglich Ausführungsbeispiele darstellenden Figuren näher erläutert. Es zeigen:
- Fig. 1: eine schematische Darstellung eines in ein Dübelloch in einem Gebäude mit Außenwanddämmsystem eingebrachten Dübellochverschlußbolzens,
- Fig. 2: eine erste Ausführungsform eines erfindungsgemäßen Dübellochverschlußbolzens,
- Fig. 3: eine alternative Ausführungsform eines erfindungsgemäßen Dübellochverschlußbolzens,
- Fig. 4: eine dritte Ausführungsform eines erfindungsgemäßen Dübellochverschlußbolzens und
- Fig. 5: eine vierte Ausführungsform eines erfindungsgemäßen Dübellochverschlußbolzens.

In der Fig. 1 erkennt man, daß ein Dübellochverschlußbolzen 1 mit einem in eine in einer tragenden Gebäudeaußenwand 2 angebrachten Bohrung 3 einsteckbaren Befestigungsteil 4 sowie mit einem mit dem Befestigungselement 4 verbundenen Abdeckflansch 5 in eine Gebäudeaußenwand mit Außenwanddämmsystem eingebaut ist. Zwischen dem Abdeckflansch 5 und dem Befestigungselement 4 ist ein Schaftbereich 6 angeordnet, welcher eine an der tragenden Gebäudeaußenwand 2 außenseitig angebrachte Isolierschicht 7 durchgreift. Im Schaftbereich 6 sind drei die Bohrung der Isolierschicht 7 ausfüllende elastische Dichtungslippen 8 eingerichtet. Der Abdeckflansch 5 weist ein Dichtungselement 9 zum Abschluß der Isolierschicht außenseitigen Bohrungsöffnung 10 auf. Das Befestigungselement 4 weist ein in die Bohrung 3 der tragenden Gebäudeaußenwand 2 einführbares Nagelteil 11 sowie mehrere Haltelamellen 12 auf, welche in Kraftschlußverbindung mit der Innenseite der Bohrung 3 ringbar sind. Die Haltelamellen 12 sind im einzelnen orthogonal zur Längserstreckung des Nagelteils 11 ausgebildet und weisen einen kreisförmigen Außenumfang auf. In allen Ausführungsbeispielen, mit Ausnahme des Gegenstandes der Fig. 5 ist der Dübellochverschlußbolzen einstückig ausgeführt. Als Material ist PP verwandt.

In der Fig. 2 erkennt man, daß die Dichtungslippen 8 sich orthogonal zur Längserstreckung des Schaftbereiches 6 erstrecken und einen kreisförmigen Außenumfang aufweisen. Die Dichtungslippen 8 weisen in radialer Richtung abnehmende Materialstärke auf. Der Außenumfang der Dichtungslippen 8 in Richtung des Befestigungselements 4 zum Abdeckflansch 5 nimmt sukzessive zu. Man erkennt weiterhin, daß das Dichtungselement 9 als abdeckflanschumfangseitig umlaufenden Andrucklippe ausgebildet ist.

Der Gegenstand der Fig. 3 unterscheidet sich vom Gegenstand der Fig. 2 dadurch, daß als zusätzliches Dichtungselement 9 ein in die Isolierschicht außenseitige Bohrungsöffnung 10 eingreifendender Dichtkonus vorgesehen ist.

Beim Gegenstand der Fig. 4 ist dagegen als zusätzliches Dichtungselement 9 ein isolierschichtseitig am Abdeckflansch 5 vorgesehener Dichtring eingerichtet, welcher aus einem elastischen, geschlossenporig geschäumten Material besteht.

Beim Gegenstand der Fig. 5 sind als Dichtungselemente alle drei vorstehenden Varianten gleichzeitig realisiert.

## Patentansprüche

1. Dübellochverschlußbolzen (1) mit einem in eine in einer tragenden Gebäudeaußenwand (2) angebrachten Bohrung (3) einsteckbaren Befestigungselement (4) sowie mit einem mit dem Befestigungselement (4) verbundenen Abdeckflansch (5),
**dadurch gekennzeichnet**,
daß zwischen dem Abdeckflansch (5) und dem Befestigungselement (4) ein Schaftbereich (6) angeordnet ist, welcher eine an der tragenden Gebäudeaußenwand (2) außenseitig angebrachte Isolierschicht (7) durchgreift,
daß im Schaftbereich (6) zumindest eine die Bohrung (3) in der Isolierschicht (7) ausfüllende elastische Dichtungslippe (8) eingerichtet ist, und
daß der Abdeckflansch (5) ein Dichtungselement (9) zum Abschluß der isolierschichtaußenseitigen Bohrungsöffnung (10) aufweist.

2. Dübellochverschlußbolzen (1) nach Anspruch 1, **dadurch gekennzeichnet, daß** die Dichtungslippe (8) sich orthogonal zur Längserstreckung des Schaftbereiches (6) erstreckt und einen kreisförmigen Außenumfang aufweist.

3. Dübellochverschlußbolzen (1) nach einem der Ansprüche 1 oder 2, **dadurch gekennzeichnet, daß** die Dichtungslippe (8) eine in radialer Richtung abnehmende Materialstärke aufweist.

4. Dübellochverschlußbolzen (1) nach einem der Ansprüche 1 bis 3, **dadurch gekennzeichnet, daß** im Schaftbereich (6) eine Mehrzahl von Dichtungslippen (8), vorzugsweise 2 bis 10, höchst vorzugsweise 2 bis 5, insbesondere 3, aufweist.

5. Dübellochverschlußbolzen (1) nach Anspruch 4, **dadurch gekennzeichnet, daß** der Außenumfang der Dichtungslippen (8) in Richtung des Befestigungselements (4) zum Abdeckflansch (5) sukzessive zunimmt.

6. Dübellochverschlußbolzen (1) nach einem der Ansprüche 1 bis 5, **dadurch gekennzeichnet, daß** das Dichtungselement (9) als Abdeckflansch umfangseitig umlaufende Andrucklippe ausgebildet ist.

7. Dübellochverschlußbolzen (1) nach einem der Ansprüche 1 bis 5, **dadurch gekennzeichnet, daß** das Dichtungselement (9) als in die isolierschichtaußenseitige Bohrungsöffnung (10) eingreifender Dichtkonus ausgebildet ist.

8. Dübellochverschlußbolzen (1) nach einem der Ansprüche 1 bis 5, **dadurch gekennzeichnet, daß** das Dichtungselement (9) als isolierschichtseitig am Abdeckflansch (5) eingerichteter Dichtring, vorzugsweise bestehend aus einem elastischen, geschlossenporig geschäumten Material, ausgebildet ist.

9. Dübellochverschlußbolzen (1) nach einem der Ansprüche 1 bis 8, **dadurch gekennzeichnet, daß** das Befestigungselement (4) ein in die Bohrung der tragenden Gebäudeaußenwand (2) einführbares Nagelteil (11) sowie eine oder mehrere Haltelamellen (12), die in Kraftschlußverbindung mit der Innenwand der Bohrung (3) bringbar sind, aufweist.

10. Dübellochverschlußbolzen nach Anspruch (9), **dadurch gekennzeichnet, daß** die Haltelamellen (12) sich orthogonal zur Längserstreckung des Nagelteils (11) erstrecken und einen kreisförmigen Außenumfang aufweisen.

11. Dübellochverschlußbolzen (1) nach einem der Ansprüche 1 bis 10, **dadurch gekennzeichnet, daß** er einstückig aus einem Kunststoff, ausgewählt aus der Gruppe bestehend aus "PVC, LDPE, HDPE, PP und Mischungen oder Copolymere dieser Stoffe", gebildet ist.

12. Dübellochverschlußbolzen (1) nach einem der Ansprüche 1 bis 5, **dadurch gekennzeichnet, daß** der Abdeckflansch (5) gegenüber dem Schaftbereich (6) verschwenkbar oder abbiegbar ist.

13. Dübellochverschlußbolzen (1) nach einem der Ansprüche 1 bis 5, **dadurch gekennzeichnet, daß** zumindest nach der Montage sichtbaren Bereiche des Abdeckflansches (5) aktiviert sind.
